# EUROPEAN PATENT APPLICATION

(11) **EP 2 819 096 A1**
(43) Date of publication of application: **31.12.2014**
(21) Application number: 14172905.3
(22) Date of filing: 18.06.2014
(51) Int. Cl.: G06T 11/60, H04N 5/272

(54) **Method and apparatus for inserting a virtual object in a video**

(30) Priority: 24.06.2013 EP 13305859
(71) Applicant: Thomson Licensing, 92130 Issy-les-Moulineaux (FR)
(72) Inventor: Hellier, Pierre, 35235 Thorigné Fouillard (FR); Chamaret, Christel, 35135 Chantepie (FR); Oisel, Lionel, 35137 La Nouaye (FR)
(74) Representative: Schmidt-Uhlig, Thomas

(57) **Abstract**

A method and an apparatus for inserting a virtual object in a video are described. The method utilizes a saliency map that characterizes the gaze allocation from a viewer on an image of the video and inserts the virtual object in the image of the video based on the saliency map. The method comprises: generating (12) a saliency map of the image of the video after the insertion (11) of the virtual object; and adjusting (13) the insertion of the virtual object based on the saliency map by adjusting at least one visual characteristic of the inserted virtual object.

## Description

### FIELD OF THE INVENTION

The present invention relates to a method and an apparatus for inserting a virtual object in a video by utilizing a saliency map of the video that characterizes the gaze allocation from a viewer on the video. The invention further relates to a computer readable medium suitable for such a method and an apparatus for inserting a virtual object in a video.

### BACKGROUND OF THE INVENTION

Virtual content insertion is an emerging application of video analysis and has been widely applied in video augmentation to improve the audiences' viewing experience. One practical application of virtual content insertion is video advertising that provides huge business opportunities for advertisers. For example, the video-sharing website YouTube inserts a banner for commercial advertisement at the bottom of the video from time to time.

One major challenge for virtual content insertion in a video is to balance its two conflicting tasks, which are to make the inserted content conspicuous enough to be noticed by a viewer and meanwhile not to interfere with the viewer's viewing experience on the original content. A conventional in-stream insertion, which inserts the virtual content into the video stream, interrupts the viewer's viewing during the display of the video. Although the interference can be reduced by inserting the virtual content at the beginning or the end of the video, the inserted content is probably skipped and avoided by the viewer. In-video insertion that inserts the virtual content within the video frames is another choice for a more effective insertion. It can be overlay insertion, i.e. the virtual content flows over the original content, or in-scene insertion, where the virtual content is embedded into the video. Either method provides a possibility to insert the virtual content at appropriate timing and positions within the video frames.

Approaches and systems for automatic in-video insertion have been studied for achieving an effective insertion and at the same time minimizing the interference for a viewer. One useful tool is the visual attention analysis, i.e. a saliency map, for the video which predicts and analyzes the gaze allocation from a viewer on the video. Generally, a salience analysis is conducted before the insertion to decide when and where to insert the virtual content in the video. The attractive shots are normally chosen as insertion time, and the less attractive regions in the video frames having the lowest saliency are chosen as insertion place in order to reduce the interference for a viewer. However, this can reduce the effectiveness of the insertion that a viewer would concentrate on the original content and ignore the inserted virtual object. In addition, since the salience analysis is accomplished before the insertion, the insertion result is not reviewed and the quality of the insertion might be poor.

### SUMMARY OF THE INVENTION

Therefore, it is an objective of the present invention to propose an improved solution for inserting a virtual object in a video such that the insertion is conspicuous enough but not overly intrusive for a viewer.

According to a first aspect of the invention, a method of insertion of a virtual object in a video, utilizing a saliency map that characterizes the gaze allocation from a viewer on an image of the video and inserting the virtual object in the image of the video based on the saliency map, is characterized in: generating a saliency map of the image of the video after the insertion of the virtual object; and adjusting the insertion of the virtual object based on the saliency map by adjusting at least one visual characteristic of the inserted virtual object.

Accordingly, an apparatus configured to insert a virtual object in a video comprises: an insertion module for inserting a virtual object in an image of a video; a saliency module for generating a saliency map of the image of the video, wherein the saliency map is generated by the saliency module after the insertion of the virtual object; and an adjustment module for adjusting the insertion of the virtual object by adjusting at least one visual characteristic of the inserted virtual object.

Also, a computer readable medium having stored therein instructions for inserting a virtual object in a video, by utilizing a saliency map that characterizes the gaze allocation from a viewer on an image of the video and by inserting the virtual object in the image of the video based on the saliency map. When being executed by a computer, the instructions cause the computer to: generate a saliency map of the image of the video after the insertion of the virtual object; and adjust the insertion of the virtual object based on the saliency map by adjusting at least one visual characteristic of the inserted virtual object.

### BRIEF DESCRIPTION OF THE DRAWINGS

For a better understanding the invention shall now be explained in more detail in the following description with reference to the figures. It is understood that the invention is not limited to this disclosed exemplary embodiments and that specified features can also expediently be combined and/or modified without departing from the scope of the present invention as defined in the appended claims. In the figures:
- Fig. 1: is a flow chart illustrating a method for inserting a virtual object in a video according to this invention.
- Fig. 2: is a flow chart illustrating a step of selecting an area in a video according to the method of this invention.
- Fig. 3: is a schematic diagram to illustrate an apparatus implementing the method of insertion of a virtual object in a video according to this invention.

### DETAILED DESCRIPTION OF PREFERED EMBODIMENTS

In the following the present invention shall be explained for the method and apparatus for inserting a virtual object in a video, e.g. in an image of the video, with the utilization of a saliency map of the video. The saliency map is used for characterizing the gaze allocation from a viewer on the target video, e.g. on an image of the video, and can be computed by any method or technique known in the field. For example, the saliency map can be computed using the methods described in Urban, F., et al. "Medium Spatial Frequencies, a Strong Predictor of Salience", Cognitive Computation 3(1), 37-47 (2011) and in Le Meur, O., et al. "Predicting visual fixations on video based on low-level visual features", Vision Research, Vol. 47/19, 2483-2498 (2007).

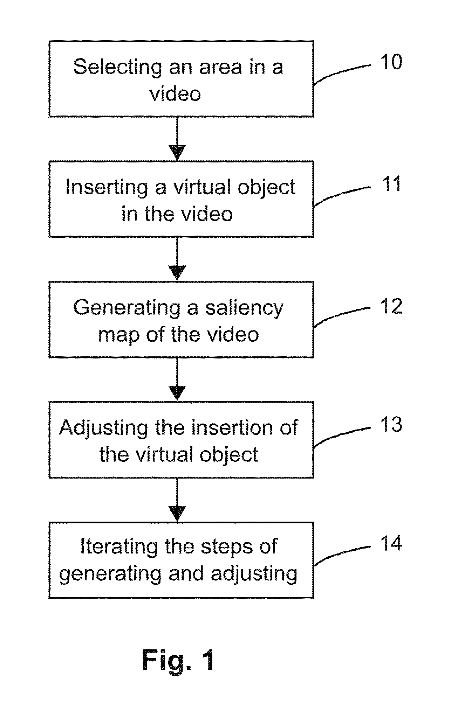

Referring to Fig. 1, a preferred embodiment of the method according to the present invention comprises: selecting 10 an area in a video; inserting 11 a virtual object in the video, preferably in the selected area; generating 12 a saliency map of the video after the insertion of the virtual object; and adjusting 13 the insertion of the virtual object based on the saliency map by adjusting at least one visual characteristic of the inserted virtual object. Preferably, the method further comprises iterating 14 the steps of generating a saliency map of the video and adjusting the insertion of the virtual object based on the saliency map. For example, the visual characteristic of the inserted virtual object can be the transparency, the brightness or the color of the virtual object, which is adjustable and influential for the visual performance of the insertion. The virtual object can be for example a 2D image or a video advertisement that is often inserted in a video sequence for commercial purpose. Optionally, the insertion of the virtual object can be overlay insertion or in-scene insertion, both of which are well known and widely applied in the field. Overlay insertion refers to an insertion that the virtual object flows over the original content of the target video, while for in-scene insertion the inserted virtual object is embedded in the original content of the video.

One of the advantages of the method according to this invention is that the insertion of the virtual object is adjustable. Since a saliency map is generated after the insertion of the virtual object, the effect of the insertion and the visual performance of the resulted video can be reviewed by a user. The insertion of the virtual object can be adjusted based on the perceptibility and the intrusiveness for a viewer, thus improves and optimizes the insertion result, e.g., seamless insertion of the virtual object. For instance, the transparency and the brightness of the virtual object can be reduced if the insertion is too glaring and intrusive. On the contrary, the insertion can be adjusted to become properly conspicuous such that the advertisement effect or the purpose of the insertion is achieved. Optionally, the adjustment of the insertion can be done iteratively depending on the user's demand.

For example, after the insertion 11 of the virtual object and the generation 12 of the saliency map, an average saliency value of the entire saliency map of the video can be defined and measured, using any known technique in the field. Optionally, a user can manually define and select a threshold T for the average saliency value in advance depending on the user's demand. The adjustment for the insertion of the virtual object can be conducted, for example, by adjusting the transparency alpha of the inserted virtual object such that the resulted average saliency value of the saliency map is bounded by the threshold T. Optionally, the adjustment can be iterated to achieve an optimal insertion result. Of course, the threshold T can be redefined or reselected at any time during the adjustment. In addition, more than one threshold T or other reference values can be defined and selected to improve the adjustment. Of course, besides the transparency alpha of the inserted virtual object, other visual characteristics of the inserted virtual object, such as the brightness and the color thereof, can also be adjusted for the adjustment. One preference is that the resulted average saliency value of the saliency map after the insertion is close to the measured average saliency value before the insertion.

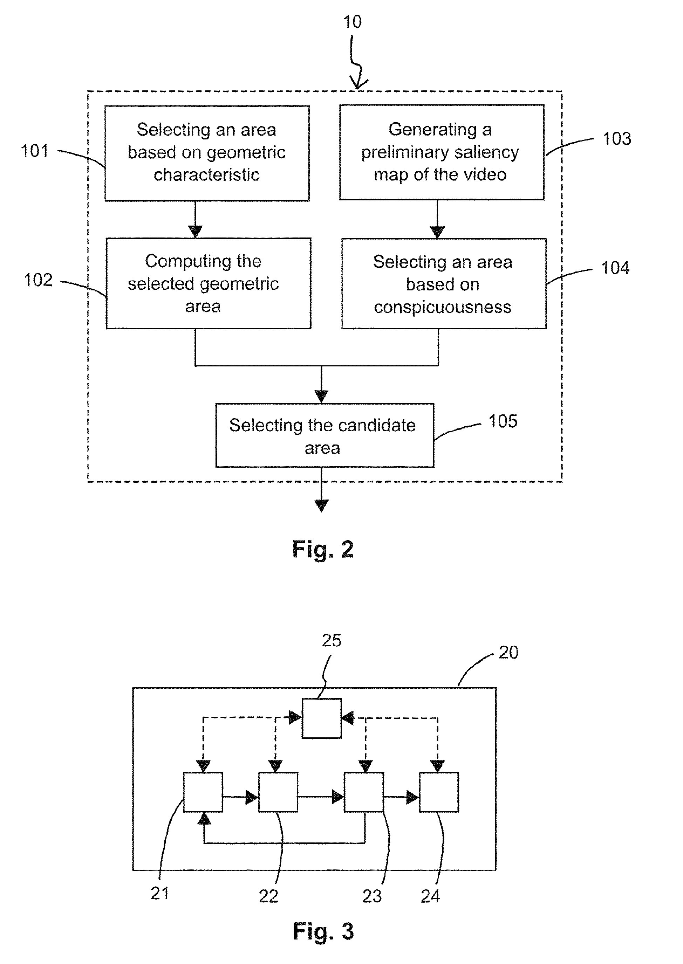

Referring to Fig. 2, preferably, the step of selecting 10 an area in the video of the preferred embodiment of the method comprises: selecting 101 an area based on the geometric characteristic of the area; computing 102 the selected geometric area; generating 103 a preliminary saliency map of the video; selecting 104 an area based on conspicuousness; and selecting 105 the candidate area for inserting 11 a virtual object in the video. The generating step 103 and the selecting step 104 can be accomplished before, after or at the same time as the selecting step 101 and the computing step 102. In other words, the sequence for the selection based on geometric characteristic of the area and the selection based on the conspicuousness of the video is flexible.

The selection 101 of an area based on geometric characteristic of the area in the video can be done manually by a user or automatically by a processor. Preferably, the selected area is a quadrilateral area such as advertisement banners, lateral portions of a truck, buildings, etc., in the video. For example, a user can manually select a quadrilateral area in the video by indicating four extremal points of an area on the first frame of the video which are subsequently localized in the entire video by the mean of a tracker, such as the KLT tracker described in Lucas, B. D. & Kanade, T., "An iterative image registration technique with an application to stereo vision", International Joint Conference on Artificial Intelligence, 674-679 (1981). An automatic method for selecting the area can for example use a robust edge detector. An area is extracted and selected by the detector if the edges of the area form a parallelogram in the video and if the shape of the area is consistent with a motion estimation performed along the video sequence.

After selecting 101 an area based on the geometric characteristic of the area, the selected geometric area is analyzed 102 for various properties such as the geometric characteristics, e.g., pose and size, and the photometric characteristics, e.g., the local variance and the color distance between the area and the inserted virtual object. For instance, the variance of the intensity over the selected area is computed and compared to the image noise of the video that is estimated by computing the mean variance on patches composing the images of the video. An area having a low variance of the intensity and low specularity is preferred to be the candidate area for the insertion of a virtual object, which is beneficial for a seamless insertion.

The generation 103 of the preliminary saliency map, which illustrates the gaze allocation, i.e. the degree of conspicuousness, from a viewer on the video, can be done by any well-known techniques in the field as described above. The selection 104 of an area based on conspicuousness is accomplished with the preliminary saliency map. Preferably, the selected area has a saliency that is high enough to be visually conspicuous for a viewer but low enough to be well natural and not overly attractive and intrusive for the viewer. Alternatively, the selected area may have a highest or lowest saliency in the saliency map of the video.

The step of selecting 105 the candidate area for inserting 11 a virtual object in the video can be done, for example, by a voting method. For example, the voting method can be a linear weighted balance of the various criteria, including the geometric and photometric characteristics of the area that are computed in the steps 101 and 102, and the conspicuousness of the area based on the preliminary saliency map, as described above. Of course, any other properties of the area can also be taken into account in the voting method. Each one of the criteria is weighted by some parameters that can be either learned on a test database or tuned manually by a user. Each area is thus given a score that can be used to sort the candidate area. In other words, the candidate area can be selected depending on different criteria for various situations and different users' demand. For instance, the candidate area can be the area with lowest image noise and lowest specularity, the area being most adequate in terms of color comparing to the color of the inserted virtual object, the area having the highest or lowest saliency in the preliminary saliency map, or the area being closest to the image center of the video. Preferably, the selected candidate area is the optimal area decided by the voting method.

Optionally, the method for inserting a virtual object in a video according to this invention further comprises a step of decomposing the video into a series of shots, each of which for example includes one or more images of the video. The decomposing step can be accomplished at any stage of the method shown in Figs. 1 and 2. With the decomposition of the video, each step of the method of this invention can be conducted for the whole video sequence or only for a part of the shots of the video. The insertion procedure is therefore simplified, and the time consumption thereof is reduced.

Fig. 3 schematically illustrates a preferred embodiment for an apparatus 20 configured to perform the method for inserting a virtual object in a video according to the present invention.

The apparatus 20 comprises a selection module 21 for selecting an area in the video for the insertion of the virtual object; an insertion module 22 for inserting a virtual object in a video; a saliency module 23 for generating a saliency map of the video; and an adjustment module 24 for adjusting the insertion of the virtual object by adjusting at least one visual characteristic of the inserted virtual object. The saliency module 23 can be used for generating both the saliency map after the insertion of the virtual object, and the preliminary saliency map used for selecting an area in the video before the insertion of the virtual object. Optionally, the apparatus 20 further comprises a decomposition module 25 for decomposing the video into a series of shots that the decomposition of the video can be conducted at any stage of the procedure as described above. Practically, the apparatus 20 can be a STB, a server, a broadcast headend, etc., such that the method of this invention can be executed in various devices. Of course, the various modules of the apparatus 20 may likewise be partially of fully combined into a single module or implemented as software running on a processor.

## Claims

1. A method of insertion of a virtual object in a video, utilizing a saliency map that characterizes the gaze allocation from a viewer on an image of the video and inserting the virtual object in the image of the video based on the saliency map, **characterized in that** the method comprises:
- generating (12) a saliency map of the image of the video after the insertion (11) of the virtual object; and
- adjusting (13) the insertion of the virtual object based on the saliency map by adjusting at least one visual characteristic of the inserted virtual object.

2. The method of claim 1, **characterized by** iterating (14) generating (12) a saliency map of the image of the video and adjusting (13) the insertion of the virtual object based on the saliency map.

3. The method according to any one of claims 1 and 2, **characterized by**, before the insertion (11) of the virtual object, selecting (10) an area in the image of the video.

4. The method of claim 3, **characterized in that** selecting (101) an area is based on the geometric characteristic of the area.

5. The method of claim 4, **characterized in that** the selected area is a parallelogram.

6. The method of claim 3, **characterized by** generating (103) a preliminary saliency map of the image of the video before selecting an area in the image, wherein selecting an area is based on the preliminary saliency map.

7. The method according to any one of claims 1 to 3, **characterized in that** the method comprises decomposing the video into a series of shots, each of which including at least one image.

8. The method according to any one of claims 1 and 2, **characterized in that** the visual characteristics of the virtual object is the transparency and/or the brightness of the virtual object.

9. The method according to any one of claims 1 and 2, **characterized in that** the insertion of the virtual object is overlay insertion such that the virtual object flows over the original content in the image of the video, or in-scene insertion such that the virtual object is embedded in the image of the video.

10. The method according to any one of claims 1 and 2, **characterized in that** the inserted virtual object is a 2D image advertisement or a video advertisement.

11. An apparatus configured to insert a virtual object in a video, utilizing a saliency map that characterizes the gaze allocation from a viewer on the image of the video and inserting the virtual object in the image of the video based on the saliency map, the apparatus comprising:
- an insertion module (22) for inserting a virtual object in an image of a video;
- a saliency module (23) for generating a saliency map of the image of the video, wherein the saliency map is generated by the saliency module after the insertion of the virtual object; and
- an adjustment module (24) for adjusting the insertion of the virtual object by adjusting at least one visual characteristic of the inserted virtual object.

12. The apparatus of claim 11, further comprises a selection module (21) for selecting an area in the image of the video for the insertion of the virtual object.

13. The apparatus according to any one of claims 11 and 12, further comprises a decomposition module (25) for decomposing the video into a series of shots, each of which including at least one image.

14. A computer readable medium having stored therein instructions for inserting a virtual object in a video, by utilizing a saliency map that characterizes the gaze allocation from a viewer on the image of the video and inserting the virtual object in the image of the video based on the saliency map, **characterized in that** when executed by a computer, the instructions cause the computer to:
generate a saliency map of the image of the video after the insertion of the virtual object; and
adjust the insertion of the virtual object based on the saliency map by adjusting at least one visual characteristic of the inserted virtual object.
